# EUROPEAN PATENT APPLICATION

(11) **EP 2 581 129 A1**
(43) Date of publication of application: **17.04.2013**
(21) Application number: 11185297.6
(22) Date of filing: 14.10.2011
(51) Int. Cl.: B01D 53/14, B01D 19/00

(54) **Method for stripping acid gas from a solvent**

(71) Applicant: Nederlandse Organisatie voor Toegepast -Natuurwetenschappelijk Onderzoek TNO, 2628 VK Delft (NL)
(72) Inventor: The designation of the inventor has not yet been filed
(74) Representative: Jansen, Cornelis Marinus

(57) **Abstract**

A method for stripping one or more gaseous acid compounds from a solution, as well as a method for depleting a gas stream (31) of one or more gaseous acid compound are described.

The method comprises
a) contacting a solution (34) that comprises one or more gaseous acid compounds and a first solvent with vapour (37) of a second solvent, said second solvent having a boiling point lower than the boiling point of said first solvent, and said second solvent being immiscible with said first solvent, thereby stripping one or more gaseous acid compounds (40) from said solution;
b) collecting one or more gaseous acid compounds (40) that are stripped from said solution; and
c) collecting solution (39) which is stripped from gaseous acid compound, wherein said solution comprises first solvent.

## Description

The invention is directed to a method for stripping one or more gaseous acid compounds from a solution, as well as to a method for depleting a gas stream of one or more gaseous acid compound.

Nowadays, it is a common viewpoint that carbon dioxide released into the atmosphere plays a major role in global climate change. Hence, the reduction of carbon dioxide emissions from fossil fuel combustion and other sources has been drawing interest as a primary means of mitigating global warming. Carbon dioxide capture involves the separation of carbon dioxide from an effluent stream after which it can be compressed to a liquid or dense gas or supercritical state for transportation by pipeline. It may then be injected into geological reservoirs *(e.g.* oil and gas fields, or deep saline aquifers), where the geological structure and processes are expected to store the carbon dioxide.

A major part of carbon dioxide emissions stems from the electricity sector, primarily from coal-fired power plants. A wide variety of industrial facilities also emit carbon dioxide as a by- or co-product of the industrial processes inherent to their industry, such as ethanol fermentation, oil and gas refining, chemical (including ethylene and ethylene oxide) production, hydrogen production, as well as other such as pulp and paper, iron and steel, ammonia and fertiliser, and cement manufacturing. Carbon dioxide in exhaust streams is present to various extents, at various temperatures and pressures, and with various other constituents (including NOₓ, SO₂).

There are commercially available carbon dioxide capture technologies that are currently being used in various industrial applications and being tested for power plant capture in pilot and demonstration projects. However, these technologies are still not widely used, primarily because they either have not been demonstrated at the scale necessary for power plant application, or they would not be cost effective.

Post-combustion carbon dioxide capture offers the greatest near-term potential for significantly reducing carbon dioxide emissions since these technologies can be retrofitted to the existing fleet of coal-fired power plants, which will likely produce the bulk of coal-fired carbon dioxide emissions for the foreseeable future. Post-combustion carbon dioxide capture involves the separation of carbon dioxide from the combustion flue gas, purification, and compression in preparation for geological storage or beneficial use such as enhanced oil recovery. It is primarily applicable to conventional coal-fired, oil-fired or gas-fired power plants, but could also be applicable to integrated gasification combined cycle and natural gas combined cycle flue gas capture.

In a typical coal-fired power plant, fuel is burnt with air in a boiler to produce steam that drives a turbine/generator to produce electricity. Flue gas from the boiler consists mostly of nitrogen, water vapour and carbon dioxide. Separating carbon dioxide from this flue gas is challenging for several reasons: a high volume of gas must be treated, the carbon dioxide is dilute, the flue gas is at atmospheric pressure, trace impurities (such as particular matter, sulphur oxides, nitrogen oxides, etc.) and oxygen can degrade chemical scrubbing agents, and compressing captured carbon dioxide from near atmospheric pressure to pipeline pressure requires a large auxiliary power load.

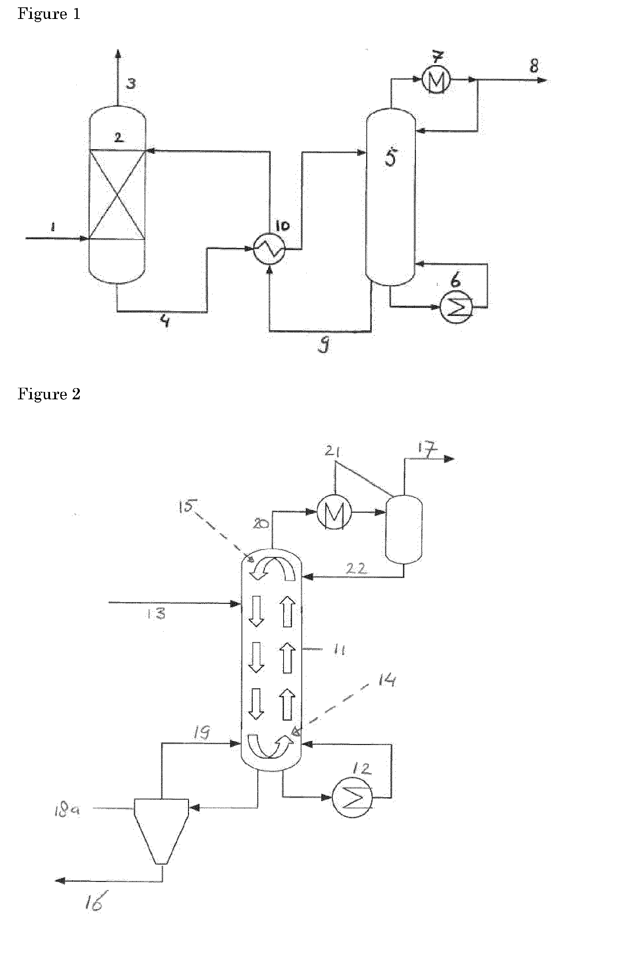

An embodiment of a conventional regenerative absorption/stripping concept for carbon dioxide removal from gaseous streams is schematically shown in the simplified flow diagram in figure 1. In the absorption stage, the flue gas to be treated 1 containing the carbon dioxide to be removed, is brought into contact with the chosen absorbent solution in an absorber 2 under conditions of pressure and temperature such that the absorbent solution absorbs virtually all the carbon dioxide. The purified gas 3 emerges at the top of the absorber 2. At the bottom of the absorber 2, the solution enriched with carbon dioxide *(viz.* the "rich solvent") 4 is drawn off and pre-heated by heat exchanger 10 before entering the stripper 5, where the rich solvent is regenerated at a temperature of typically 100-120 °C and at pressures near the atmospheric pressure. Heat is supplied to the reboiler 6 using low pressure steam to maintain regeneration conditions, at which the solvent is kept at its boiling point. Some of the water in the solvent is turned into steam, which promotes stripping by reducing the carbon dioxide partial pressure. Steam is recovered in the condenser 7 and fed back to the stripper 5, after which the produced carbon dioxide gas 8 leaves the condenser to the compression stage. At the bottom of the stripper 5, the hot regenerated solution (*viz.* the "lean solvent") 9 leaves the stripper column and is recycled back to the absorber 2 via the rich/lean heat exchanger 10.

It has been shown that aqueous alkanolamines, such as aqueous monoethanolamine (MEA), can be successfully applied in absorption and stripping processes for the capture of acid gases (such as carbon dioxide and hydrogen sulphide) from flue gas, natural gas, synthesis gas and other gases. Unfortunately, a large quantity of energy is required to regenerate the MEA solvent. This would, for instance, considerably reduce the net efficiency of a power plant. Typically, the rich solvent is thermally regenerated in a packed column at high temperatures of 100-120 °C. This leads to a thermal energy penalty because the solvent has to be heated in the reboiler at elevated temperatures for maintaining it at boiling conditions to reduce the carbon dioxide partial pressure. The high temperature also results in the degradation of the absorption solvent, thereby increasing the costs of carbon dioxide capture.

In addition, typical amine solution concentrations are limited by viscosity and corrosion. Therefore, current amine systems use a solution that is between 20 and 30 % amine with the balance being water. Although the 70 to 80 % water present in the solution helps control the solvent temperature during the exothermic absorption, the water, with its high heat capacity, necessitates significant amounts of sensible heating and stripping energy upon regeneration.

In view of the above, there are technological challenges in improving the post-combustion carbon dioxide processes. In particular, much attention has been paid trying to decrease the high-energy requirements to regenerate the rich solvent. Many of these efforts focus on alternative solvents with increased capacity to absorb carbon dioxide and lower heats of reaction: promoted monoethanolamine, tertiary amines, promoted potassium carbonate, amino acid salts, etc. Other improvements focus on the use of innovative process configurations, such as split flow or multi-pressure strippers, and energy integration with the power plant.

Objective of the invention is to provide an efficient method for stripping one or more gaseous acid compounds from a solution.

More specifically, objective of the invention is to improve the energy efficiency of solvent regeneration in a method for capturing one or more gaseous acid compounds from a gas stream, such as a flue gas.

Further objective of the invention is to lower the desorption temperature in solvent regeneration, thereby reducing the energy requirements for recovery of the solvent as well as reducing solvent degradation.

The inventors surprisingly found that one or more of these objectives can, at least in part, be met by employing a secondary solvent in the stripper.

Accordingly, in a first aspect the invention is directed to a method for stripping one or more gaseous acid compounds from a solution comprising
a) contacting a solution that comprises one or more gaseous acid compounds and a first solvent with vapour of a second solvent, said second solvent having a boiling point lower than the boiling point of said first solvent, and said second solvent being immiscible with said first solvent, thereby stripping one or more gaseous acid compounds from said solution;
b) collecting one or more gaseous acid compounds that are stripped from said solution; and
c) collecting solution which is stripped from gaseous acid compound, wherein said solution comprises first solvent.

Intuitively, the introduction of an additional phase in the process might be considered to hamper the process operation. However, the inventors surprisingly found that this unconventional feature in fact has significant advantages over the conventional process.

The invention is based on the insight that the carbon dioxide partial pressure in the stripper can be reduced by applying a second solvent. In accordance with the invention, the one or more gaseous acid compounds are stripped from the solution with first solvent by the vapours of the second solvent.

Advantageously, this results in a lowering of the regeneration temperature and consequently considerably less energy input for solvent regeneration. As a result, the invention enables the use of waste heat, for instance from the combustion, for the solvent regeneration. Moreover, degradation of the absorption solvent will be reduced because of the lower operation temperatures.

In addition, the invention can allow to maintain elevated pressures of the one or more gaseous acid compounds after the stripping which reduces the energy input for subsequent compression of the collected gaseous acid compounds (such as carbon dioxide). The invention, for instance, allows delivering carbon dioxide with pressures above 1 bar. As a comparison, with vacuum based stripping, the pressure of the carbon dioxide stream would be below 0.1 bar.

The term "stripping" as used in this application is meant to refer to reducing the content of one or more components. Hence, stripping one or more gaseous acid compounds from a solution, for instance, refers to reducing the content of the one or more gaseous acid compounds in said solution.

The term "immiscible" as used in this application is meant to refer to a situation where the second solvent is insoluble or partially soluble in the first solvent. If mixed, the first and second solvent would be separated from each other by a common liquid-liquid interface, such as a suspension, dispersion, colloid, and the like. For example, a person skilled in the art would understand that a second solvent (*e.g.* an organic solvent) having a solubility in the first solvent (*e.g.* an aqueous solvent, such as water) of less than about 1.0 g/l, such as less than 0.1 g/l, less than 10 mg/l, or less than 1 mg/l, would be considered to be immiscible in the first solvent.

The terms "lean", and "rich" as used in this application are not meant as precise indicators of the amount of gaseous acid compounds in the gas or in the solution, but only indicate the relative amount of the gaseous acid compounds therein. For example, a rich solution contains more gaseous acid compound than a lean solution.

In a highly advantageous embodiment of the invention, the first solvent comprises water (and can thus be an aqueous solvent), and more preferably the first solvent comprises water and an amine or amino acid salt.

The second solvent preferably comprises an organic solvent. More preferably, the second solvent is an organic solvent or a mixture thereof. Organic solvents that may suitably be comprised in the second solvent include one or more selected from the group consisting of cyclohexane, petroleum ether (preferably petroleum ether having a boiling point of 60-80 °C or petroleum ether having a boiling point of 40-60 °C), diethyl ether, ethyl acetate, methyl-tert-butyl ether, hexane, cyclohexane, pentane, and the like.

Preferably, the second solvent has a boiling point of at most 90 °C, preferably at most 80 °C, such as in the range of 30-80 °C, or in the range of 60-80 °C. In any case, the boiling point of the second solvent should be lower than the boiling point of the first solvent. In case the first solvent and/or the second solvent comprises a mixture of more than one solvent, then each of the components in the second solvent has a boiling point lower than each of the components comprised in the first solvent.

The one or more gaseous acid compounds can comprise one or more selected from the group consisting of CO₂, SO₂, HF, H₂S, and HCl. In an embodiment, the one or more gaseous acid compounds comprise at least one of carbon dioxide and hydrogen sulphide. In a further embodiment, the one or more gaseous acid compounds comprise carbon dioxide. In accordance with the method of the invention, the one or more gaseous acid compounds may be present in the solution in absorbed form, *i.e.* the one or more gaseous acid compounds may be dissolved in the solution but may also be absorbed to an absorbent agent. In practice, the one or more gaseous acid compounds will often be absorbed to an absorbent agent.

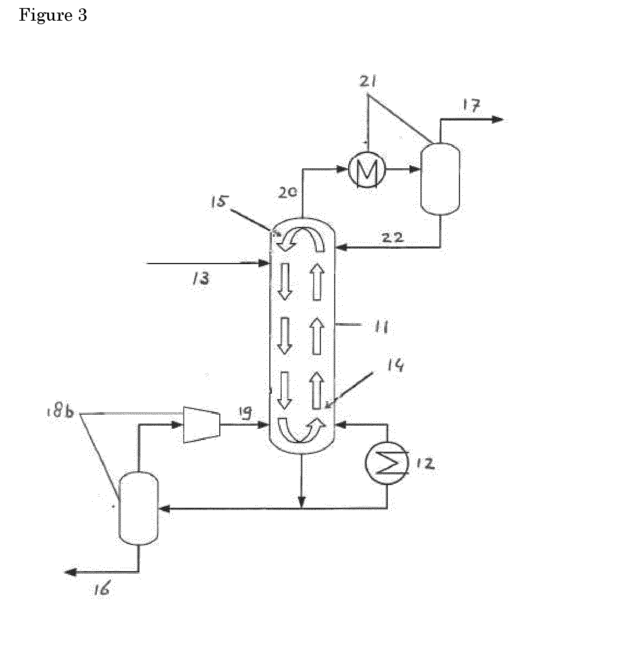

Contacting step a) in the method of the invention can suitably be performed in a stripper column, which stripper column is operatively linked to a reboiler. An exemplary embodiment thereof is schematically depicted in figures 2 and 3. As shown in the embodiment of figures 2 and 3, the second solvent can be continuously recirculated inside the stripper column 11. In figure 2, the second solvent boils at relatively low temperature in the reboiler 12, preferably between 60 and 80 °C, or between 30 and 80 °C. One or more gaseous acid compounds are stripped from the solution 13 that comprises one or more gaseous acid compounds and a first solvent (*viz.* rich first solvent) by vapours 14 of the second solvent. Vapour phase of the second solvent condenses as it passes up through the stripper column 11. Accordingly, at the top of the stripper column 11, the second solvent is preferably present as a liquid 15. At the bottom of the stripper column 11, the second solvent can be maintained at boiling conditions, preferably without leaving the stripper column, as the regenerated solution 16, which comprises first solvent and has been stripped from gaseous acid compound (*viz.* lean first solvent), is collected. At the top of the stripper column 11, a stream 17 with the one or more gaseous acid compounds that are stripped from the rich first solvent is collected.

In a preferred embodiment, the collected solution which has been stripped from gaseous acid compound is subjected to liquid-liquid separation in a suitable device, *e.g.* a settler or a hydrocyclone. This embodiment is illustrated in figure 2, wherein a liquid-liquid separation device 18a is used to separate lean first solvent 16 from second solvent, after which the separated second solvent 19 is sent back to the stripper column 11. In accordance with this embodiment, second solvent that leaves the bottom of the stripper column can be recovered and reused in the stripper column.

In another suitable embodiment, the collected solution which has been stripped from gaseous acid compound is subjected to a lean vapour compression step wherein second solvent is recovered from the collected solution which has been stripped from gaseous acid compound. Recovered second solvent can then be recycled to contacting step a), preferably via a vapour compressor. This embodiment is illustrated in figure 3, wherein a lean vapour compression system 18b is used to separate lean first solvent 16 from second solvent, after which the separated second solvent 19 is sent back to the stripper column 11. In accordance with this embodiment, second solvent that leaves the bottom of the stripper column can be recovered and reused in the stripper column.

In a further embodiment, the collected one or more gaseous acid compounds that are stripped from the solution are subjected to a condensing step wherein second solvent is recovered from the collected one or more gaseous acid compounds that are stripped from the solution. Recovered second solvent can then be recycled to contacting step a). This embodiment is illustrated in figures 2 and 3, wherein stream 20 which emerges at the top of the stripper column 11 and contains the collected one or more gaseous acid compounds is passed through a condenser system 21 which returns liquid phase 22 resulting from condensation of second solvent vapour back to the stripping column 11. In accordance with this embodiment, second solvent vapour that remains at the upper part of the stripper column and leaves the stripper column together with the collected one or more gaseous acid compounds can be recovered and reused in the stripper column. In case there is still some remaining second solvent vapour with the collected one or more gaseous acid compounds, the second solvent vapour will be condensed during the compression stage of the gaseous acid compounds, recovered and sent back to the stripper.

During operation, it is preferred that in contacting step a) the first solvent is in excess of the second solvent (*i.e.* in the stripper, it is preferred that the volume of the first solvent is larger than the volume of the second solvent). During contacting step a), the volume of the first solvent can suitably be about 2-6 times higher than the volume of the second solvent, such as about four times higher.

In a further aspect, the invention is directed to a method for depleting a gas stream of one or more gaseous acid compound, comprising the steps of:
i) contacting a gas stream comprising one or more gaseous acid compounds with an absorbent solution lean in said one or more gaseous acid compounds, thereby obtaining an absorbent solution rich in said one or more gaseous acid compounds and a gas stream depleted of said one or more gaseous acid compounds;
ii) subjecting the absorbent solution rich in said one or more gaseous acid compounds to a method for stripping one or more gaseous acid compounds from a solution according to the invention, thereby obtaining an absorbent solution lean in said one or more gaseous acid compounds; and
iii) recycling the absorbent solution lean in said one or more gaseous acid compounds to step i).

The gas stream in this aspect can comprise flue gas or exhaust gas, natural gas, synthesis gas and/or other gases. Preferably, the gas stream is a combustion exhaust gas or a natural gas.

Suitably, the absorbent solution comprises the first solvent. The absorbent solution is enriched in one or more gaseous acid compounds during an absorption phase in step i), after which the rich absorbent solution is regenerated to lean absorbent solution in a regeneration phase in step ii). Hence, in this method the absorbent solution rich in the one or more gaseous acid compounds which is subjected to the stripping method in step ii) corresponds to the solution that comprises one or more gaseous acid compounds mentioned in the method described hereinabove, while the absorbent solution lean in the one or more gaseous acid compounds which is obtained in the stripping method in step ii) corresponds to the solution which is stripped from gaseous acid compound mentioned in the method described hereinabove.

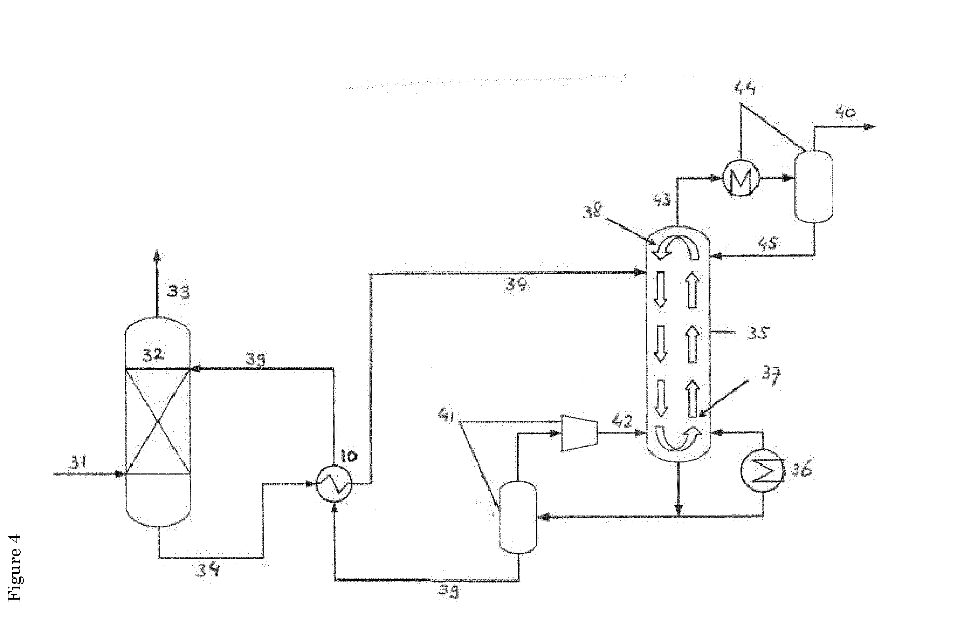

An exemplary embodiment of this aspect of the invention is schematically shown in figure 4. In the absorption stage, the gas stream to be treated 31 containing one or more gaseous acid compounds to be removed, is brought into contact with the absorbent solution in an absorber 32 under conditions of pressure and temperature such that the absorbent solution removes one or more gaseous acid compounds. The purified gas 33 emerges at the top of the absorber 32. At the bottom of the absorber 32, the absorbent solution rich in said one or more gaseous acid compounds (*viz.* the "rich absorbent solution") 34 is drawn off and pre-heated by heat exchanger 10 before entering the stripper 35, where the rich absorbent solution is regenerated. A second solvent (having a boiling point lower than the solvent of the absorbent solution and not miscible with the solvent of the absorbent solution) recirculates inside the stripper column 35. The second solvent boils at relatively low temperature in the reboiler 36, preferably between 30 and 80 °C. One or more gaseous acid compounds are stripped from the rich absorbent solution 34 by vapours 37 of the second solvent. Vapour phase of the second solvent condenses as it passes up through the stripper column 35. Accordingly, at the top of the stripper column 35, the second solvent is preferably present as a liquid 38. At the bottom of the stripper column 35, the hot regenerated lean absorbent solution 39 leaves the stripper column and is recycled back to the absorber 32 via the rich/lean heat exchanger 10. At the top of the stripper column 35, a stream 40 with the one or more gaseous acid compounds that are stripped from the rich first solvent is collected.

In the exemplary embodiment shown in figure 4, a lean vapour compression system 41 is used to separate lean absorbent solution 42 from second solvent, after which the separated second solvent 42 is sent back to the stripper column 35. Further, stream 43 which emerges at the top of the stripper column 35 and contains the collected one or more gaseous acid compounds is passed through a condenser system 44 which returns liquid phase 45 resulting from condensation of second solvent vapour back to the stripping column 35.

The absorbent solution preferably comprises an organic compound that contains one or more amine groups, one or more carboxylic groups and/or one or more sulphonic acid groups. Some non-limiting examples of organic compounds that can be suitable comprised in the absorbent solution include taurine, methyl taurine, methyl-α-aminopropionic acid, *N*-(β-ethoxy)taurine, and *N*-(β-aminoethyl)taurine, amino acids described in US-A-3 042 483 (which document is herewith completely incorporated by reference), alanine, derivatives of alanine (such as N-methyl alanine), glycine, derivatives of glycine (such as dimethyl glycine), asparagine, glutamine, lysine, and histidine. Other examples of organic compounds that contain one or more amine groups include monoethanolamine, methyl dimethanol amine, 2-amino-2-methyl-1-propanol, and piperazine.

Contacting step i) can suitably be performed in one or more absorber columns. Examples thereof include a spray column, a bubble column and a packed column.

### Examples

### Materials and methods

Monoethanol amine (MEA), methyl dimethanol amine (MDEA), cyclohexene, petroleum ether and a solution of potassium taurate.

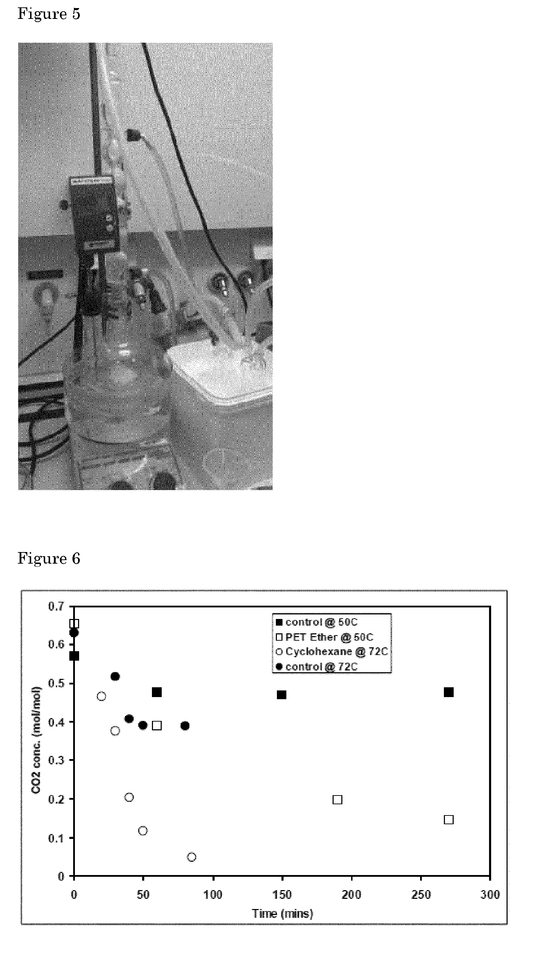

Proof of principle experiments were carried out using the setup shown in figure 5. The liquid was placed in a flask which was heated in a water bath at a constant temperature in reflux to ensure no loss of liquid. A cold trap was placed behind the condenser for full recovery of the liquid and a gas flow meter was used to measure the gas stream. The same setup was used for all experiments. Samples were taken from the liquid at regular intervals and the carbon dioxide content was analysed.

Three different liquids were tested for carbon dioxide desorption - MDEA, MEA and amino acid salt. The liquids were pre-loaded with carbon dioxide by bubbling the gas through them overnight resulting in absorption of carbon dioxide into the liquid. Initially, the carbon dioxide desorption from the MDEA solution (2 M MDEA) was tested in a low boiling solvent - petroleum ether. The liquid mixture was boiling at 50 °C. A control experiment was carried out without the presence of the petroleum ether and this was compared to the experiment in the presence of the non-miscible solvent.

The remaining experiments were carried out using a higher boiling solvent - cyclohexane. 4M and 5 M solutions of MEA were preloaded as described and the desorption was determined both in the presence and absence of the immiscible solvent under the same experimental conditions. The amino acid salt of ca. 15 wt.% was also preloaded with the carbon dioxide and the desorption characteristics compared with and without the solvent

### Results

The boiling of liquid could be observed in the presence of the immiscible solvent. This could also be seen to result in the gas flow as measured by the gas flow meter. Figure 5 shows the desorption profile of MDEA using both the petroleum ether and the cyclohexane. The carbon dioxide concentration is described in moles of carbon dioxide per mol of amine. The amount of carbon dioxide observed in the solution was observed to decrease in time in the control and the solvent assisted desorption of the invention. However, figure 6 shows that in the presence of the immiscible solvent (according to the invention), there is faster and more release of carbon dioxide from the loaded liquid. The figure also shows that the rate of carbon dioxide release increases with temperature as observed with the steeper slope at the higher temperature. In the first 100 minutes, more than 90 % of the absorbed carbon dioxide has been removed from the solvent in the presence of cyclohexane compared to less than 40 % in the control. In the presence of petroleum ether (at lower temperature), after 4 hours, about 78 % of the carbon dioxide had been removed from the solvent compared to 16 % in the control.

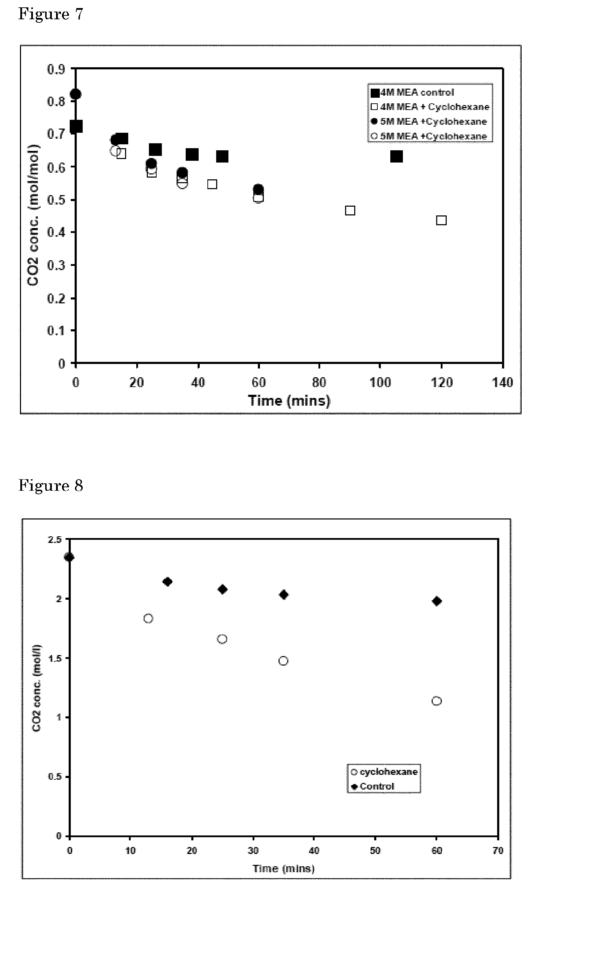

Figure 7 shows the profile for desorption in the 4 M and 5 M solutions of MEA with the concentration of carbon dioxide described per mol of amine. It can be seen that there is increase in the desorption of carbon dioxide from the absorption liquid in the presence of the immiscible solvent. It was observed for the 4 M MEA solution that about 40 % of the carbon dioxide had been removed from the preloaded amine after 2 hours in the presence of cyclohexane, compared to 12 % without the cyclohexane. For the 5 M solution, there is a faster release of carbon dioxide with about 40 % of the gas released after the first hour.

Figure 8 shows the desorption profile of the amino acid salts with the carbon dioxide concentration described per litre of liquid. In accordance with the other cases, the desorption is enhanced in the presence of cyclohexane compared to the control experiments. It was observed that after the first hour, more than 50 % of the absorbed carbon dioxide had been released from the liquid in comparison to 16 % of the carbon dioxide in the control experiment.

## Claims

1. Method for stripping one or more gaseous acid compounds from a solution comprising
a) contacting a solution that comprises one or more gaseous acid compounds and a first solvent with vapour of a second solvent, said second solvent having a boiling point lower than the boiling point of said first solvent, and said second solvent being immiscible with said first solvent, thereby stripping one or more gaseous acid compounds from said solution;
b) collecting one or more gaseous acid compounds that are stripped from said solution; and
c) collecting solution which is stripped from gaseous acid compound, wherein said solution comprises first solvent.

2. Method according to claim 1, wherein said first solvent comprises water, preferably said first solvent is water.

3. Method according to claim 1 or 2, wherein said second solvent comprises an organic solvent, such as one or more selected from the group consisting of cyclohexane, petroleum ether, diethyl ether, ethyl acetate, methyl-tert-butyl ether, hexane, cyclohexane, and pentane.

4. Method according to any one of claims 1-3, wherein said second solvent has a boiling point of at most 90 °C, preferably at most 80 °C, such as in the range of 30-80 °C or in the range of 60-80 °C.

5. Method according to any one of claims 1-4, wherein said gaseous acid compound comprises one or more selected from the group consisting of CO₂ SO₂, HF, H₂S, and HCl, preferably the gaseous acid compound comprises on or more selected from CO₂ and H₂S, more preferably the gaseous acid compound comprises CO₂.

6. Method according to any one of claims 1-5, wherein said contacting occurs in a stripper column, which stripper column is operatively linked to a reboiler.

7. Method according to claim 6, wherein the second solvent is continuously recirculated inside the stripper column.

8. Method according to any one of claims 1-7, wherein the collected solution which has been stripped from gaseous acid compound is subjected to a lean vapour compression step wherein second solvent is recovered from the collected solution which has been stripped from gaseous acid compound, and wherein the recovered second solvent is recycled to contacting step a), preferably via a vapour compressor.

9. Method according to any one of claims 1-8, wherein the collected one or more gaseous acid compounds that are stripped from said solution are subjected to a condensing step wherein second solvent is recovered from the collected one or more gaseous acid compounds that are stripped from said solution, which second solvent is recycled to contacting step a).

10. Method according to any one of claims 1-9, wherein during contacting step a), the first solvent is in excess of the second solvent.

11. Method for depleting a gas stream of one or more gaseous acid compound, comprising the steps of:
i) contacting a gas stream comprising one or more gaseous acid compounds with an absorbent solution lean in said one or more gaseous acid compounds, thereby obtaining an absorbent solution rich in said one or more gaseous acid compounds and a gas stream depleted of said one or more gaseous acid compounds;
ii) subjecting the absorbent solution rich in said one or more gaseous acid compounds to a method for stripping one or more gaseous acid compounds from a solution according to any one of claims 1-10, thereby obtaining an absorbent solution lean in said one or more gaseous acid compounds; and
iii) recycling the absorbent solution lean in said one or more gaseous acid compounds to step i).

12. Method according to any one of claims 11, wherein the absorbent solution an organic compound that contains one or more amine groups, one or more carboxylic groups and/or one or more sulphonic acid groups.

13. Method according to claim 11 or 12, wherein the contacting in step i) is performed in one or more absorber columns, preferably one or more selected from a spray column, a bubble column and a packed column.

14. Method according to any one of claims 11-13, wherein the gas stream comprising one or more gaseous acid compounds is a combustion exhaust gas or a natural gas.
